# EUROPÄISCHE PATENTSCHRIFT

(11) **EP 3 398 197 B1**
(45) Veröffentlichungstag und Bekanntmachung des Hinweises auf die Patenterteilung: **27.04.2022**
(21) Anmeldenummer: 16820308.1
(22) Anmeldetag: 29.12.2016
(51) Int. Cl.: H01G 4/32, H01G 9/15, H01G 9/06, H01G 9/145

(54) **KONDENSATOR-BAUTEIL**
CAPACITOR COMPONENT
COMPOSANT DE CONDENSATEUR

(30) Priorität: 30.12.2015 DE 102015122977
(43) Veröffentlichungstag der Anmeldung: 07.11.2018
(73) Patentinhaber: TDK Electronics AG, 81671 München (DE)
(72) Erfinder: WILL, Norbert, 89522 Heidenheim (DE); BUENO DE CARMARGO MELLO, Fabio Augusto, 80997 München (DE); PERETTA, Igor, CEP 90020-024 Rio Grande Do Sul/ RS (BR); FARIA, Paulo, 94020-070 Rio Grande Do Sul/RS (BR)
(74) Vertreter: Epping - Hermann - Fischer
(86) Internationale Anmeldenummer: PCT/EP2016/082854
(87) Internationale Veröffentlichungsnummer: WO 2017/114905

(56) Entgegenhaltungen:
- EP-A1- 0 201 771
- EP-A1- 2 372 732
- WO-A1-98/14968
- DE-A1- 1 614 379
- DE-T2- 69 224 411
- JP-A- 2002 175 949
- JP-A- 2005 093 761
- JP-A- 2006 120 697
- JP-A- 2007 081 006
- JP-A- 2010 251 436
- US-A1- 2013 194 712

## Beschreibung

Die vorliegende Erfindung betrifft ein Kondensator-Bauteil. Bei dem Kondensator-Bauteil kann es sich insbesondere um einen Elektrolytkondensator handeln. Es kann sich insbesondere um einen Elektrolytkondensator von der axialen Bauart handeln.

EP 0 201 771 A1 zeigt einen Wickelkondensator mit einem Wickel mit flachem Querschnitt.

Die vorliegende Erfindung löst die Aufgabe, ein verbessertes Kondensator-Bauteil anzugeben. Das verbesserte Kondensator-Bauteil kann beispielsweise unempfindlicher gegen Beschädigungen durch auf einen Wickel einwirkende Kräfte sein.

Diese Aufgabe wird durch ein Kondensator-Bauteil gemäß dem Anspruch 1 gelöst.

Es wird ein Kondensator-Bauteil vorgeschlagen, das einen Wickel mit einem ovalen Kernloch aufweist, wobei das Kernloch einen maximalen Durchmesser und eine minimalen Durchmesser, der kleiner als der maximale Durchmesser ist, aufweist. Der Wickel kann derart konstruiert sein, dass durch eine punktuell auf den Wickel einwirkende Kraft eine nur lokal auftretende Verformung des Wickels erzeugbar ist.

Als Kernloch wird hier eine Öffnung im Innern des Wickels bezeichnet, die frei von den Lagen des Wickels ist. Das Kernloch entsteht dadurch, dass die Lagen des Wickels um einen Dorn gewickelt werden, der danach entfernt wird. Um ein ovales Kernloch zu erzeugen, kann ein ovaler oder flacher Dorn verwendet werden.

Sowohl die ovale Ausgestaltung des Kernlochs als auch die Konstruktion des Wickels derart, dass Verformungen lokal begrenzt auftreten können, ermöglichen es, das Kondensator-Bauteil unempfindlicher gegen Beschädigungen auszugestalten, die durch auf einen Wickel einwirkende Kräfte entstehen können.

Da ein Wickel eines Kondensator-Bauteils üblicherweise in ein zylinderförmiges Gehäuse mit einem kreisförmigen Querschnitt eingebaut wird, ist es vorteilhaft, wenn der Querschnitt des Wickels eine im Wesentlichen kreisförmige Form hat. Durch die kreisförmige Form des Wickelquerschnitts kann sichergestellt werden, dass Kräfte, die von dem Gehäuse auf den Wickel ausgeübt werden, symmetrisch über den Umfang des Wickels verteilt sind. Die ovale Ausgestaltung des Kernlochs ermöglicht es nunmehr, die Form des Wickels gezielt anzupassen. Ist beispielsweise der Wickel in bestimmten Bereichen verbreitert, beispielsweise durch die Anordnung eines Anodenanschlusses oder eines Kathodenanschlusses, so kann dieser Effekt ausgeglichen werden durch eine entsprechende Anordnung des ovalen Kernlochs. Das ovale Kernloch ermöglicht es somit sicherzustellen, dass unterschiedlich breite Bereiche des Wickels im Wesentlichen gleich durch auf dem Wickel einwirkende Kräfte beeinflusst werden.

Ein Durchmesser des Kernlochs bezeichnet hierbei eine Verbindungslinie, die zwei einander gegenüberliegende Randpunkte des Kernlochs miteinander verbindet und dabei durch den Mittelpunkt des Kernlochs verläuft. Aufgrund seiner ovalen, nicht kreisförmigen Form weist das Kernloch unterschiedlich große Durchmesser auf. Insbesondere weist das Kernloch einen maximalen Durchmesser auf, der den größten Abstand zweier einander gegenüberliegender Randpunkte des Kernlochs bezeichnet, wobei eine Verbindungslinie dieser Punkte durch den Mittelpunkt des Kernlochs verläuft. Entsprechend bezeichnet der minimale Durchmesser den geringsten Abstand zweier einander gegenüberliegender Randpunkte des Kernlochs, wobei die Verbindungslinie dieser beiden Punkte durch den Mittelpunkt des Wickellochs verläuft. Dabei wird das Kernloch stets in einem Querschnitt betrachtet, der senkrecht zu einer Wickelachse steht, um die der Wickel gewickelt ist.

Ferner ist der Wickel derart konstruiert, dass durch eine punktuell auf dem Wickel einwirkende Kraft eine nur lokal auftretende Verformung des Wickels erzeugbar ist. Als lokale Verformung kann dabei eine Verformung angesehen werden, die sich nicht über den gesamten Umfang des Wickels erstreckt, sondern die nur Teilbereiche des Wickels betrifft. Insbesondere ist der Wickel derart konstruiert, dass eine nur punktuell auf dem Wickel einwirkende Kraft nicht zu einer Verformung des gesamten Wickels führt.

Eine Kraft kann dann als punktuell einwirkend bezeichnet werden, wenn sie nicht ganzflächig auf den gesamten Wickel wirkt, sondern nur auf Bereiche des Wickels einwirkt, die deutlich kleiner sind als die gesamte Oberfläche des Wickels. Auch eine Kraft, die von einer Sicke auf den Wickel ausgeübt wird, wird hier als punktuell einwirkend angesehen.

Die Begrenzung der Verformung auf lokale Bereiche kann auf verschiedene Arten erzielt werden. Beispielsweise kann der Wickel einen inneren Wickelbereich aufweisen, der frei von Elektroden ist und der sich unmittelbar an das ovale Kernloch anschließt. Alternativ oder ergänzend kann der Wickel ein besonders groß ausgestaltetes ovales Kernloch aufweisen, das beispielsweise einen maximalen Durchmesser von zumindest 6 mm aufweist und/oder einen maximalen Durchmesser von zumindest 25 % des Durchmessers des Wickels aufweist. Bei beiden Ausführungsbeispielen ist somit ein innerer Bereich des Wickels in seiner Steifigkeit reduziert, entweder dadurch, dass er lediglich Separatormaterial aufweist, oder dadurch, dass er frei von Material ist, so dass dieser in seiner Stabilität reduzierte Bereich die punktuell auf dem Wickel einwirkende Kraft absorbieren kann und in Form einer lokalen Verformung abbauen kann.

Eine solche punktuell auf dem Wickel einwirkende Kraft kann beispielsweise durch eine Sicke entstehen, die in einem Gehäuse ausgebildet ist, in dem der Wickel angeordnet ist. Der zylindrische Wickel wird in dem Gehäuse durch die Sicke gehalten. Dementsprechend übt die Sicke dabei eine Haltekraft auf den Wickel aus.

Beispielsweise an punktuellen Schweißstellen, an denen Anodenanschlüsse und Kathodenanschlüsse mit dem Wickel verschweißt werden, kann der Wickel Schwachstellen aufweisen, die bei mechanischen Verformungen des Wickels zu einem Durchstechen des Wickels führen. Dabei kommt eine Anodenfolie mit einer Kathodenfolie in Berührung und es kommt zu einem galvanischen Kurzschluss, der zur Zerstörung des Kondensator-Bauteils führen kann.

Das oben beschriebene Kondensator-Bauteil kann das Auftreten solchen Durchstechens vermeiden, indem es Verformungen des Wickels reduziert.

Die hier beschriebenen Ausgestaltungen des Kondensator-Bauteils kann somit die Gefahr des Durchschlagens des Wickels reduzieren. Es kommt oftmals in Folge von einer zu starken Verformung des Wickels zu einem Durchstechen. Wie oben beschrieben, kann es durch die hier beschriebenen Ausgestaltungen des Wickels jedoch ermöglicht werden, solche Verformungen lokal zu begrenzen. Dementsprechend sind andere Maßnahmen zur Vermeidung von Durchschlägen, beispielsweise das Verwenden von besonders dicken beziehungsweise dichten Separatoren, d.h. Elektrolytpapieren, nicht erforderlich, um einen Kurzschluss verhindern zu können. Es können vielmehr dünne Separatoren, d.h. Elektrolytpapiere mit einer Dicke von 40 bis 60 pm verwendet werden, die es ermöglichen, ein Kondensator-Bauteil mit einem geringeren ESR (ESR = Equivalent Series Resistance) zu konstruieren. Ein solches Kondensator-Bauteil weist somit einen geringeren inneren Verlustwiderstand und damit einen verbesserten Wirkungsgrad auf.

In einem Ausführungsbeispiel weist der Wickel einen inneren Wickelbereich auf, der frei von Elektroden ist, wobei der innere Wickelbereich sich in radialer Richtung nach außen an das ovale Kernloch anschließt und einen Durchmesser von zumindest 35 % des Durchmessers des Wickels, vorzugsweise von zumindest 45 % des Durchmessers des Wickels, aufweist. Der innere Wickelbereich kann sich insbesondere in radialer Richtung nach außen unmittelbar an das ovale Kernloch anschließen.

Der innere Wickelbereich kann aus einem Separatormaterial bestehen. Der innere Wickelbereich kann aus Papier oder Elektrolytpapier bestehen. Der innere Wickelbereich besteht aus Papier und einem Elektrolyt. Der innere Wickelbereich kann im Wesentlichen ringförmig sein und das ovale Kernloch umschließen. Der oben angegebene Durchmesser des inneren Wickelbereichs bezeichnet bei einem im Wesentlichen ringförmigen inneren Wickelbereich hier den äußeren Durchmesser des Rings.

Da der innere Wickelbereich frei von Elektroden ist, ist er weicher als die übrigen Bereiche des Wickels, die Elektroden aufweisen. Dementsprechend verformt sich der innere Wickelbereich eher, wenn eine Kraft auf dem Wickel ausgeübt wird. Dementsprechend ermöglicht es der innere Wickelbereich diese auf dem Wickel ausgeübten Kräfte zu absorbieren, ohne dass es zu Verformungen und/oder Beschädigungen der Bereiche des Wickels kommt, in denen die Elektroden angeordnet sind. Auf diese Weise wird die Gefahr eines galvanischen Kurzschlusses infolge eines Durchstechens des Wickels reduziert.

Alternativ oder ergänzend kann der maximale Durchmesser des Kernlochs zumindest 6 mm und/oder zumindest 25 % des Durchmessers des Wickels betragen. Somit kann das Kernloch größer ausgestaltet sein, als dieses für die Herstellung des Kondensators in einem Wickelverfahren notwendig ist. Das große Kernloch fungiert dabei in einer ähnlichen Weise wie der innere Wickelbereich. Es ermöglicht es, Kräfte die auf den Wickel wirken, zu absorbieren ohne dass es zu Verformungen des Wickels in dem Bereich kommt, in dem die Elektroden ausgebildet sind. Der maximale Durchmesser des Kernlochs kann ferner zumindest 35 % des Durchmessers des Wickels betragen.

Sowohl das vergrößerte Kernloch als auch das Ausbilden eines inneren Wickelbereichs, der frei von Elektroden ist, scheint dem bei axialen Kondensatoren üblichen Ziel, die Kapazität durch möglichst große Elektroden zu vergrößern, entgegenzulaufen. Wie oben diskutiert, ermöglichten es diese Ausführungsbeispiele jedoch, einen Wickel zu konstruieren, der unempfindlich gegenüber Beschädigungen durch auf den Wickel einwirkenden Kräfte ist. Dieser Vorteil wiegt die Reduzierung einer maximal erreichbaren Kapazität deutlich auf.

Der Wickel kann einen Durchmesser im Bereich von 7 mm bis 30 mm, vorzugsweise von 10 mm bis 22 mm aufweisen. Durchmesser in dieser Größenordnung sind durchaus üblich bei axialen Elektrolytkondensatoren. Dieser Durchmesser ist in Zusammenhang mit dem Durchmesser des ovalen Kernlochs zu betrachten. Hier zeigt sich, dass das ovale Kernloch so groß ausgestaltet ist, dass ein nicht unwesentlicher Teil des Wickels in seinem Inneren frei von Material bleibt. Dadurch wird die Steifigkeit des Wickels reduziert und der Wickel wird unempfindlicher gegen Beschädigungen durch auf ihn einwirkenden Kräfte.

Der maximale Durchmesser des Kernlochs kann zumindest 1 mm größer sein als der minimale Durchmesser des Kernlochs. Ist der maximale Durchmesser zumindest 1 mm größer als der minimale Durchmesser, so kann bei einer entsprechenden Ausrichtung des ovalen Kernlochs der Effekt ausgeglichen werden, dass der Anodenanschluss und ein Kathodenanschluss zu einer Deformierung eines runden Wickels führen.

Das Kondensatorbauteil kann einen Anodenanschluss und einen Kathodenanschluss aufweisen, die jeweils mit dem Wickel kontaktiert sind und die auf einander gegenüberliegenden Seiten des Kernlochs angeordnet sind.

Eine Verbindungslinie zwischen dem Anodenanschluss und dem Kathodenanschluss kann senkrecht zu einer Linie entlang des maximalen Durchmessers des Wickels stehen. Die Verbindungslinie zwischen dem Anodenanschluss und dem Kathodenanschluss kann parallel zu einer Linie entlang des minimalen Durchmessers des Wickels verlaufen. Dabei wird der Wickel in einem Querschnitt betrachtet, der senkrecht zur Wickelachse geschnitten ist. Durch diese Ausrichtung des ovalen Kernlochs hinsichtlich des Anodenanschlusses und des Kathodenanschlusses wird sichergestellt, dass das ovale Kernloch die Verformung des Wickels durch die Anschlüsse ausgleicht. Es kann dementsprechend ein Wickel konstruiert werden, dessen Querschnitt im Wesentlichen kreisförmig ist.

Bei dem Kondensator-Bauteil kann es sich um einen Elektrolytkondensator handeln.

Im Folgenden wird die Erfindung anhand der Figuren genauer beschrieben.

Es zeigen:
- Figur 1: einen Querschnitt durch ein Kondensator-Bauteil gemäß einem ersten Ausführungsbeispiel,
- Figur 2: ein Röntgenbild eines Kondensator-Bauteils,
- Figuren 3A und 3B: die Verteilung der Kräfte, die Gehäusen auf die Wickel von Kondensator-Bauteilen ausgeübt werden, und
- Figur 4: einen Querschnitt durch ein Kondensator-Bauteil gemäß einem zweiten Ausführungsbeispiel.

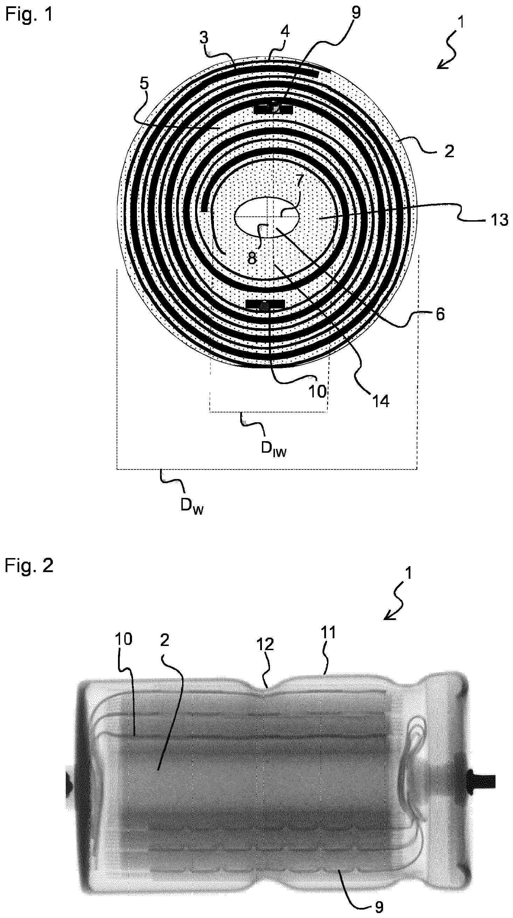

Figur 1 zeigt ein erstes Ausführungsbeispiel eines Kondensator-Bauteils 1. Das Kondensator-Bauteil 1 weist einen Wickel 2 auf. Der Wickel 2 weist Lagen einer Anodenfolie 3, einer Kathodenfolie 4 und eines Separators 5 auf, die übereinander um eine Wickelachse gewickelt sind. Bei dem Separator 5 kann es sich um Papier handeln. Die Anodenfolie 3 und die Kathodenfolie 4 bilden jeweils eine Elektrode des Kondensator-Bauteils. Figur 1 zeigt das Kondensator-Bauteil 1 in einem Querschnitt, wobei das Kondensator-Bauteil 1 senkrecht zu der Wickelachse aufgeschnitten ist.

Das Kondensator-Bauteil 1 weist ein ovales Kernloch 6 auf. Der Mittelpunkt des ovalen Kernlochs 6 liegt im Mittelpunkt des Wickels 2. Das ovale Kernloch 6 weist einen maximalen Durchmesser 7 und einen minimalen Durchmesser 8 auf, wobei der minimale Durchmesser 8 kleiner ist als der maximale Durchmesser 7. Sowohl der maximale Durchmesser 7 als auch der minimale Durchmesser 8 verlaufen durch den Mittelpunkt des ovalen Kernlochs 6. Das ovale Kernloch 6 wird erzeugt, indem die Lagen des Wickels 2 um einen flachen oder ovalen Wickeldorn gewickelt werden.

Ferner weist das Kondensator-Bauteil 1 einen Anodenanschluss 9 und einen Kathodenanschluss 10 auf. Der Anodenanschluss 10 und der Kathodenanschluss 10 sind jeweils streifenförmig ausgebildet. Sie erstrecken sich in Richtung der Wickelachse. Der Anodenanschluss 9 ist elektrisch mit der Anodenfolien 3 kontaktiert. Der Kathodenanschluss 10 ist elektrisch mit der Kathodenfolie 4 kontaktiert. In beiden Fällen erfolgt die Kontaktierung durch Schweißen. Insbesondere kann der Anodenanschluss 9 mit der Anodenfolie 3 punktförmig an mehreren Stellen verschweißt sein. Der Kathodenanschluss 10 kann mit der Kathodenfolie 4 punktförmig an mehreren Stellen verschweißt sein.

In einem alternativen Ausführungsbeispiel kann das Kondensator-Bauteil 1 jeweils mehrere Anodenanschlüsse 9, die mit der Anodenfolie 3 verschweißt sind, und mehrere Kathodenanschlüsse 10, die mit der Kathodenfolie 4 verschweißt sind, aufweisen.

Figur 2 zeigt eine Röntgenaufnahme eines solchen Kondensator-Bauteils 1 gemäß dem alternativen Ausführungsbeispiel mit mehreren Anodenanschlüssen 9 und mehreren Kathodenanschlüssen 10. In Figur 2 ist zu erkennen, dass die Anschlüsse 9, 10 jeweils punktuell mit einer Anodenfolie 3 beziehungsweise Kathodenfolie 4 verbunden sind. Durch diese punktuellen Schweißstellen können Unebenheiten in dem Wickel 2 entstehen.

Der Wickel 2 ist in einem Gehäuse 11 angeordnet, das im Wesentlichen zylindrisch ist. In dem Gehäuse 11 ist eine Sicke 12 ausgebildet. Wird nunmehr ein mechanischer Druck auf den Wickel 2 ausgeübt, beispielsweise durch die Sicke 12, so sind insbesondere die unebenen Stellen des Wickels 2, die durch die punktuelle Verschweißung der Anschlüsse 9, 10 entstehen, gefährdet, durch den Druck mechanische Verformungen zu erleiden. Durch solche mechanischen Verformungen kann das Kondensator-Bauteil 1 an Spannungsfestigkeit verlieren.

Eine noch bedeutendere Gefahr liegt jedoch im sogenannten "Durchstechen". Dabei werden die Lagen des Wickels 2 so stark verformt, dass die Anodenfolie 3 infolge der mechanischen Verformung unmittelbar mit der Kathodenfolie 4 in Kontakt kommt, so dass es zu einem galvanischen Kurzschluss kommt. Wie im Folgenden noch genauer erläutert wird, ist der Wickel 2 derart ausgestaltet, dass eine solche Verformung, die infolge einer punktuell auf den Wickel 2 einwirkenden Kraft entsteht, lokal begrenzt bleibt. Damit kann auch verhindert werden, dass mehrerer Verformungen, die an unterschiedlichen Stellen des Wickels 2 auftreten, sich gegenseitig verstärken.

Figur 1 zeigt, dass der Wickel 2 eine inneren Wickelbereich 13 aufweist, der frei von der Anodenfolie 3 und der Kathodenfolie 4 ist. Der innere Wickelbereich 13 schließt sich unmittelbar an das ovale Kernloch 6 an. In dem inneren Wickelbereich 13 weist der Wickel 2 lediglich die Lagen des Separators 5 auf. Dabei kann es sich insbesondere um Papier und Elektrolyt handeln. Da die Anodenfolie 3 und die Kathodenfolie 4 nicht im inneren Wickelbereich 13 angeordnet sind, ist der innere Wickelbereich 13 frei von den Elektroden, die durch diese Folien 3, 4 ausgebildet werden. Der innere Wickelbereich 13 weist einen Durchmesser D_{IW} von zumindest 35 % des Durchmessers D_{W} des Wickels 2 auf, vorzugsweise von zumindest 45 % des Durchmessers D_{W}.

Da der innere Wickelbereich 13 frei von Elektroden ist, weist er eine geringere mechanische Festigkeit auf. Er ist dementsprechend weicher ausgestaltet als die weiter außen liegenden Bereiche des Wickels 2. Daher ist der gesamte Wickel 2 weniger starr als dies für einen Wickel der Fall wäre, bei dem die Anodenfolie 3 und die Kathodenfolie 4 auch im inneren Wickelbereich 13 angeordnet wären. Dieses führt dazu, dass Kräfte die punktuell auf dem Wickel 2 einwirken, nur zu lokalen Verformungen des Wickels 2 führen. Insbesondere kann der Wickel 2 beispielsweise in einem Abschnitt des inneren Wickelbereichs 13 verformt werden, ohne dass dadurch auch andere Bereiche des Wickels 2 beeinträchtigt werden. Der innere Wickelbereich 13 absorbiert somit die einwirkende Kraft, ohne dass diese auf andere Bereiche des Wickels 2 weitergeleitet wird.

Figur 1 zeigt ferner, dass der Anodenanschluss 9 und der Kathodenanschluss 10 auf einander gegenüberliegenden Seiten des Kernlochs 6 angeordnet sind. Insbesondere steht eine Verbindungslinie 14 zwischen dem Anodenanschluss 9 und dem Kathodenanschluss 10 senkrecht auf dem maximalen Durchmesser 8 des Kernlochs 6.

Durch den Anodenanschluss 9 und den Kathodenanschluss 10 wird die Ausdehnung des Wickels 2 in Richtung der Verbindungslinie 14 der beiden Anschlüsse 9, 10 erhöht. Um diesen Effekt auszugleichen, ist das ovale Kernloch 6 derart ausgerichtet, dass die Verbindungslinie 14 der beiden Anschlüsse 9, 10 parallel zu dem minimalen Durchmesser 8 des ovalen Kernlochs 6 verläuft. Die Verbreiterung des Wickels 2 durch die Anschlüsse 9, 10 wird somit durch ein in diese Richtung dünner ausgestaltetes Kernloch 6 ausgeglichen. Damit kann insgesamt ein im Wesentlichen kreisförmiger Querschnitt des Wickels 2 erzielt werden.

Der kreisförmige Querschnitt ist oftmals vorteilhaft, da Gehäuse 11 für Kondensator-Bauteile 1 üblicherweise einen kreisförmigen Querschnitt aufweisen. Wird der Wickel 2 in ein Gehäuse 11 mit kreisförmigem Querschnitt eingebaut, so weist ein kreisförmiger Wickel 2 den Vorteil auf, dass von dem Gehäuse 11 ausgeübte mechanische Kräfte gleichmäßig über den Umfang des Wickels 2 verteilt werden. Solche Kräfte können insbesondere durch in das Gehäuse 11 eingebrachte Sicken 12 ausgeübt werden. Würde die Form des Wickels 2 zu stark von einer Kreisform abweichen, wären diese Kräfte ungleichmäßig verteilt, was sich nachteilig auf die Schwingfestigkeit des Kondensator-Bauteils 1 auswirken würde.

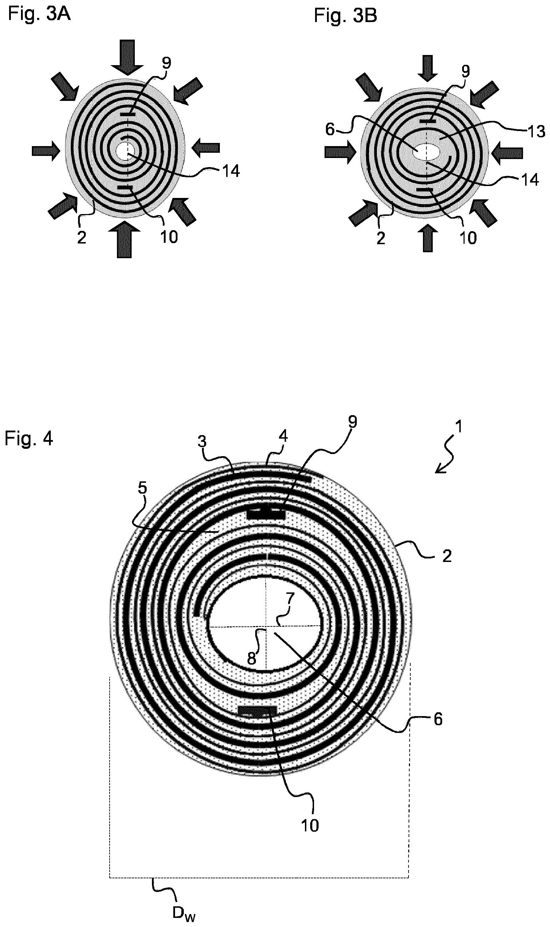

Figuren 3A und 3B zeigen die Verteilung der Kräfte, die nach dem Einbringen des Wickels 2 in ein Gehäuse 11 mit einer Sicke 12 auf den jeweiligen Wickel 2 einwirkt. Zur Vereinfachung der Darstellung ist die Kathodenfolie 4 in den Figuren 3A und 3B nicht eingezeichnet.

Figur 3A zeigt dabei ein Kondensator-Bauteil 1, das ein rundes Kernloch und keinen inneren Wickelbereich 13, der frei von Elektroden ist, aufweist. Figur 3A zeigt dass entlang der Verbindungslinie 14 des Anodenanschlusses 9 mit dem Kathodenanschluss 10 besonders große mechanische Kräfte auf den Wickel 2 wirken. Dementsprechend liegt eine asymmetrische Kräfteverteilung vor, die die Schwingfestigkeit des Kondensator-Bauteils 1 negativ beeinflusst.

Figur 3B zeigt dagegen die Kräfteverteilung bei einem Wickel 2 mit einem ovalen Kernloch 6 und einem inneren Wickelbereich 13, der frei von Elektroden ist. Es ist zu erkennen, dass entlang der Verbindungslinie 14 von Anodenanschluss 9 und Kathodenanschluss 10 im Vergleich zu Figur 3A nun deutlich geringere mechanische Kräfte auf den Wickel 2 einwirken. Dementsprechend liegt eine wesentlich symmetrischere Kräfteverteilung vor, so dass der Wickel 2 eine verbesserte Schwingfestigkeit aufweist.

Das ovale Kernloch 6 und der innere Wickelbereich 13 führen somit zu einander unterstützenden technischen Effekten. Durch die Ausrichtung des ovalen Kernlochs 6 derart, dass der minimale Durchmesser 8 mit der Verbindungslinie 14 des Anodenanschlusses 9 mit dem Kathodenanschluss 10 zusammenfällt, wird ein nahezu kreisförmiger Querschnitt des Wickels 2 erreicht, der eine gleichmäßige Verteilung der auf den Wickel 2 einwirkenden Kräfte bewirkt. Ferner sorgt der innere Wickelbereich 13 dafür, dass die von den Kräften erzeugte Verformung absorbiert werden kann und diese nur lokal auftritt, ohne den gesamten Wickel 2 negativ zu beeinflussen. Somit ist das Kondensator-Bauteil 1 insgesamt besonders unempfindlich gegen Beschädigungen durch auf den Wickel 2 ausgeübte Kräfte.

Figur 4 zeigt ein zweites Ausführungsbeispiel des Kondensator-Bauteils 1, bei dem das Kernloch 6 einen größeren maximalen Durchmesser 7 aufweist, als dies für den Wickelprozess notwendig ist. Das Kernloch 6 kann beispielsweise einen maximalen Durchmesser 7 von zumindest 6 mm aufweisen. Alternativ oder ergänzend kann das Kernloch 6 einen maximalen Durchmesser 7 von zumindest 25 % des Durchmessers D_{W} des Wickels 2 aufweisen, vorzugsweise von zumindest 35 % des Durchmessers D_{W} des Wickels 2. Dabei kann der Wickel 2 einen Durchmesser im Bereich von 5 mm bis 30 mm, vorzugsweise von 10 mm bis 22 mm aufweisen.

Dieses besonders groß ausgestaltete ovale Kernloch 6 bewirkt - genauso wie der innere Wickelbereich 13, der frei von Elektroden ist, im ersten Ausführungsbeispiel -, dass der Wickel 2 weniger starr ist. Das besonders groß ausgestaltete ovale Kernloch 6 erlaubt dementsprechend lokale Verformungen infolge von punktuell auf den Wickel 2 einwirkenden Kräften.

### Bezugszeichenliste

- 1: Kondensator-Bauteil
- 2: Wickel
- 3: Anodenfolie
- 4: Kathodenfolie
- 5: Separator
- 6: Kernloch
- 7: maximaler Durchmesser
- 8: minimaler Durchmesser
- 9: Anodenanschluss
- 10: Kathodenanschluss
- 11: Gehäuse
- 12: Sicke
- 13: innerer Wickelbereich
- 14: Verbindungslinie

- D_{IW}: Durchmesser des inneren Wickelbereichs
- D_{W}: Durchmesser des Wickels

## Patentansprüche

1. Kondensator-Bauteil (1), aufweisend:
einen Wickel (2) mit einem ovalen Kernloch (6), das einen maximalen Durchmesser (7) und einen minimalen Durchmesser (8), der kleiner als der maximale Durchmesser (7) ist, aufweist,
**dadurch gekennzeichnet, dass**
der Wickel (2) einen inneren Wickelbereich (13) aufweist, der frei von Elektroden ist, wobei der innere Wickelbereich (13) sich in radialer Richtung nach außen an das ovale Kernloch (6) anschließt und einen Durchmesser (D_{IW}) von zumindest 35 % des Durchmessers (D_{W}) des Wickels (2) aufweist,
und dass der innere Wickelbereich (13) aus Papier und einem Elektrolyt besteht,
und dass der Wickel (2) in einem Gehäuse (11) angeordnet ist, das eine Sicke (12) ausbildet, wobei der Wickel (2) durch die Sicke (12) gehalten wird.

2. Kondensator-Bauteil (1) gemäß Anspruch 1,
wobei innere Wickelbereich (13) einen Durchmesser (D_{IW}) von zumindest 45 % des Durchmessers (D_{W}) des Wickels (2) aufweist.

3. Kondensator-Bauteil (1) gemäß einem der vorherigen Ansprüche,
wobei der maximale Durchmesser(7) des Kernlochs (6) zumindest 6 mm und/oder zumindest 25 % des Durchmessers (Dw) des Wickels (2) beträgt.

4. Kondensator-Bauteil (1) gemäß einem der vorherigen Ansprüche,
wobei der maximale Durchmesser (7) des Kernlochs (6) zumindest 35 % des Durchmessers (D_{W}) des Wickels (2) beträgt.

5. Kondensator-Bauteil (1) gemäß einem der vorherigen Ansprüche,
wobei der Wickel (2) einen Durchmesser (D_{W}) im Bereich von 7 mm bis 30 mm, vorzugsweise von 10 mm bis 22 mm aufweist.

6. Kondensator-Bauteil (1) gemäß einem der vorherigen Ansprüche,
wobei der maximale Durchmesser (7) des Kernlochs (6) mindestens einen Millimeter größer ist als der minimale Durchmesser.

7. Kondensator-Bauteil (1) gemäß einem der vorherigen Ansprüche,
wobei das Kondensator-Bauteil (1) einen Anodenanschluss (9) und einen Kathodenanschluss (10) aufweist, die jeweils mit dem Wickel (2) kontaktiert sind und die auf einander gegenüberliegenden Seiten des Kernlochs (6) angeordnet sind.

8. Kondensator-Bauteil (1) gemäß einem der vorherigen Ansprüche,
wobei es sich um einen Elektrolytkondensator handelt.

## Claims

1. Capacitor component (1), having:
a winding (2) comprising an oval core hole (6), which has a maximum diameter (7) and a minimum diameter (8), which is smaller than the maximum diameter (7),
**characterized in that**
the winding (2) has an inner winding region (13) that is free of electrodes, wherein the inner winding region (13) adjoins the oval core hole (6) in the radial direction towards the outside and has a diameter (D_{IW}) of at least 35% of the diameter (D_{W}) of the winding (2),
and **in that**
the inner winding region (13) consists of paper and an electrolyte,
and **in that**
the winding (2) is arranged in a housing (11), which forms a bead (12), wherein the winding (2) is held by the bead (12).

2. Capacitor component (1) according to Claim 1, wherein the inner winding region (13) has a diameter (D_{IW}) of at least 45% of the diameter (D_{W}) of the winding (2).

3. Capacitor component (1) according to one of the preceding claims,
wherein the maximum diameter (7) of the core hole (6) is at least 6 mm and/or at least 25% of the diameter (D_{W}) of the winding (2).

4. Capacitor component (1) according to one of the preceding claims,
wherein the maximum diameter (7) of the core hole (6) is at least 35% of the diameter (D_{W}) of the winding (2).

5. Capacitor component (1) according to one of the preceding claims,
wherein the winding (2) has a diameter (D_{W}) in the range of from 7 mm to 30 mm, preferably of from 10 mm to 22 mm.

6. Capacitor component (1) according to one of the preceding claims,
wherein the maximum diameter (7) of the core hole (6) is at least one millimetre greater than the minimum diameter.

7. Capacitor component (1) according to one of the preceding claims,
wherein the capacitor component (1) has an anode terminal (9) and a cathode terminal (10), which are each contactconnected to the winding (2) and which are arranged on mutually opposite sides of the core hole (6).

8. Capacitor component (1) according to one of the preceding claims,
wherein said capacitor component is an electrolytic capacitor.

## Revendications

1. Composant de condensateur (1), comprenant :
un enroulement (2) avec un trou de noyau ovale (6), qui présente un diamètre maximal (7) et un diamètre minimal (8) qui est inférieur au diamètre maximal (7),
**caractérisé en ce que**
l'enroulement (2) présente une zone d'enroulement intérieure (13) qui est exempte d'électrodes, la zone d'enroulement intérieure (13) se raccordant dans la direction radiale vers l'extérieur au trou de noyau ovale (6) et présentant un diamètre (D_{IW}) d'au moins 35 % du diamètre (D_{W}) de l'enroulement (2),
et **en ce que**
la zone d'enroulement intérieure (13) est constituée de papier et d'un électrolyte,
et **en ce que**
l'enroulement (2) est agencé dans un boîtier (11) qui forme une moulure (12), l'enroulement (2) étant maintenu par la moulure (12).

2. Composant de condensateur (1) selon la revendication 1, dans lequel la zone d'enroulement intérieure (13) présente un diamètre (D_{IW}) d'au moins 45 % du diamètre (D_{W}) de l'enroulement (2).

3. Composant de condensateur (1) selon l'une quelconque des revendications précédentes, dans lequel le diamètre maximal (7) du trou de noyau (6) est d'au moins 6 mm et/ou d'au moins 25 % du diamètre (D_{W}) de l'enroulement (2) .

4. Composant de condensateur (1) selon l'une quelconque des revendications précédentes, dans lequel le diamètre maximal (7) du trou de noyau (6) est d'au moins 35 % du diamètre (D_{W}) de l'enroulement (2).

5. Composant de condensateur (1) selon l'une quelconque des revendications précédentes, dans lequel l'enroulement (2) présente un diamètre (D_{W}) dans la plage allant de 7 mm à 30 mm, de préférence de 10 mm à 22 mm.

6. Composant de condensateur (1) selon l'une quelconque des revendications précédentes ,dans lequel le diamètre maximal (7) du trou de noyau (6) est supérieur d'au moins un millimètre au diamètre minimal.

7. Composant de condensateur (1) selon l'une quelconque des revendications précédentes, dans lequel le composant de condensateur (1) présente une borne d'anode (9) et une borne de cathode (10), qui sont respectivement en contact avec l'enroulement (2) et qui sont agencées sur des côtés opposés l'un à l'autre du trou de noyau (6).

8. Composant de condensateur (1) selon l'une quelconque des revendications précédentes, celui-ci consistant en un condensateur électrolytique.
